# FASCICULE DE BREVET EUROPEEN

(11) **EP 0 702 589 B1**
(45) Date de publication et mention de la délivrance du brevet: **27.08.1997**
(21) Numéro de dépôt: 94918896.5
(22) Date de dépôt: 08.06.1994
(51) Int. Cl.: A63G 9/12, A47C 3/02, F16B 7/04

(54) **DIPOSITIF DE SOLIDARISATION ENTRE UNE BARRE HORIZONTALE ET DEUX TIGES INCLINEES**
VORRICHTUNG ZUM BEFESTIGEN VON ZWEI GEBOGENEN BARREN AN EINEN HORIZONTALEN BARREN
DEVICE FOR RIGIDLY SECURING TWO ANGLED BARS TO A HORIZONTAL BAR

(30) Priorité: 08.06.1993 FR 9306818
(43) Date de publication de la demande: 27.03.1996
(73) Titulaire: AMCA-NOVAL, F-75019 Paris (FR)
(72) Inventeur: LAFUGE, Christian, F-92700 Colombes (FR)
(74) Mandataire: Dronne, Guy
(86) Numéro de dépôt international: FR9400676
(87) Numéro de publication internationale: WO9428992

(56) Documents cités:
- DE-B- 1 083 601
- US-A- 2 705 162
- US-A- 2 885 233
- US-A- 2 906 551

## Description

La présente invention a pour objet un ensemble constitué par une barre horizontale solidaire de deux tiges inclinées.

De façon plus précise, l'invention concerne un tel ensemble utilisable notamment pour le montage de portiques du type de ceux qu'on installe dans des jardins ou autres lieux similaires pour y suspendre des agrès, tels que des balançoires, des trapèzes, etc.

Comme on le sait, ces portiques sont essentiellement constitués par une barre ou poutre horizontale à l'extrémité de laquelle est fixé un ensemble de deux pieds légèrement inclinés constituant les parties verticales du portique.

Dans les solutions connues, la fixation des tiges inclinées sur les extrémités de la poutre est réalisé le plus souvent à l'aide de pièces d'assemblage qui sont soudées sur la poutre. Cette solution présente un double inconvénient : d'une part, la nécessité de réaliser cette soudure interdit l'utilisation d'acier inoxydable pour réaliser les éléments tubulaires du portique. Cela est défavorable vu que, bien entendu, ces portiques sont soumis à des conditions climatiques rigoureuses. L'autre inconvénient est que ces pièces d'assemblage font bien sûr saillie hors de la poutre et augmentent donc l'encombrement de cette partie du portique. Cela est défavorable lorsque l'ensemble des éléments constitutifs du portique démontés est stocké dans une caisse en carton ou un autre emballage similaire.

Une autre solution consiste à les fixer par vissage. Cependant, ce mode d'assemblage nécessite la réalisation de trous dans la barre horizontale, ce qui affaiblit localement sa résistance mécanique et favorise la formation de rouille. Une telle solution est notamment décrite dans le document US-A-2.885.233.

Un objet de la présente invention est de fournir un ensemble constitué par une barre horizontale solidaire de deux tiges inclinées sensiblement verticales dans lequel le dispositif de solidarisation est amovible par rapport à la barre horizontale tout en assurant une solidarisation efficace et compatible avec les exigences de sécurité en cette matière.

Pour atteindre ce but, l'ensemble constitué par une barre horizontale solidaire de deux tiges inclinées disposées dans un plan vertical qui comprend un dispositif de solidarisation comportant deux pièces tubulaires présentant chacune une première extrémité apte à recevoir une première extrémité d'une des tiges et une deuxième extrémité munie de moyens de fixation sur la barre, se caractérise en ce que chaque moyen de fixation comprend une extension ayant une forme apte à coopérer avec une portion du contour de la barre horizontale et une paire de brides de fixation disposées aux deux extrémités de ladite extension selon le sens de la longueur de la barre, ledit dispositif de solidarisation comprenant en outre deux ensembles de moyens formant collier de serrage, chaque collier de serrage enserrant une des extrémités des extensions des pièces tubulaires et étant engagé dans les brides correspondantes et en ce que les pièces tubulaires comportent des moyens pour solidariser, de façon démontable, l'une par rapport à l'autre les premières extrémités des pièces tubulaires.

On comprend que, grâce au dispositif de solidarisation selon l'invention, la barre horizontale ainsi d'ailleurs que les tiges inclinées ne comportent aucun élément de solidarisation. En effet, ceux-ci sont entièrement démontables et amovibles. Cependant, ils assurent une solidarisation efficace tout en étant d'un montage aisé même par un non-spécialiste.

Selon un mode préféré de réalisation, la barre présente une section droite circulaire et le dispositif de solidarisation se caractérise en ce que chaque extension des pièces tubulaires comporte une portion ayant la forme d'au moins un quart de surface cylindrique pour venir en appui sur la partie correspondante de la barre horizontale et ladite barre comporte en regard de chaque ensemble formant collier de serrage au moins une partie aplatie apte à coopérer avec une partie conjuguée du collier de serrage.

Selon un mode préféré de mise en oeuvre, chaque moyen formant collier de serrage est constitué par deux éléments, les éléments de serrage étant reliés entre eux par leurs extrémités à l'aide d'organes de vissage.

On comprend que, grâce à la présence de ces colliers de serrage et à leur constitution, leur montage autour des extensions des pièces tubulaires est aisé et ils assurent une fixation très sûre des pièces tubulaires sur la barre horizontale. En outre, la partie aplatie de la barre en regard des colliers de serrage assure l'immobilisation des pièces tubulaires par rapport à la barre selon la direction de la longueur de cette dernière.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1 est une vue en perspective de côté montrant une pièce tubulaire solidaire de la barre horizontale ;
- la figure 2 est une vue en coupe selon le plan de la figure 1 ;
- la figure 3 est une vue de côté d'une pièce tubulaire de fixation isolée ; et
- la figure 4 est une vue de dessous des deux pièces tubulaires montées sur la barre horizontale.

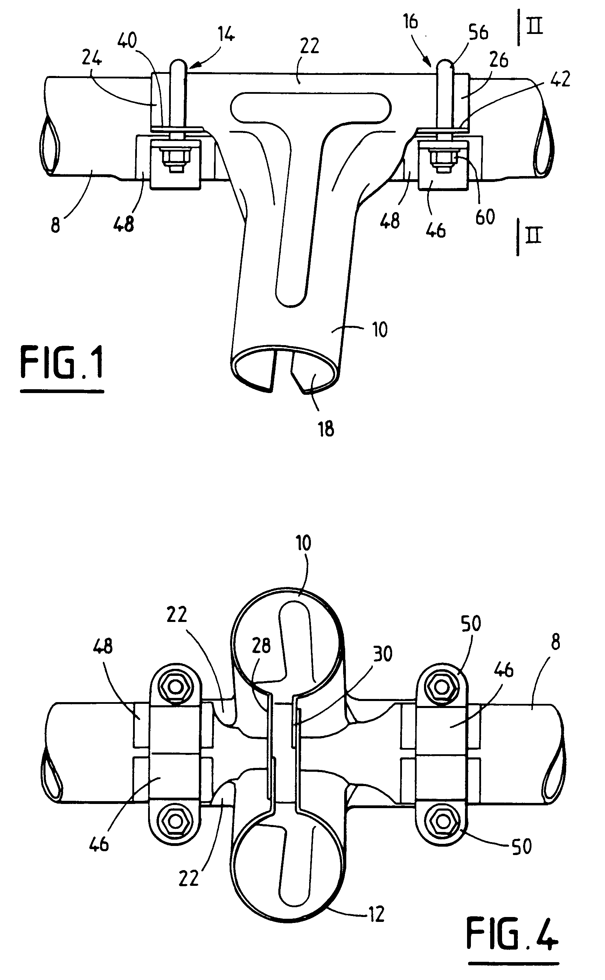

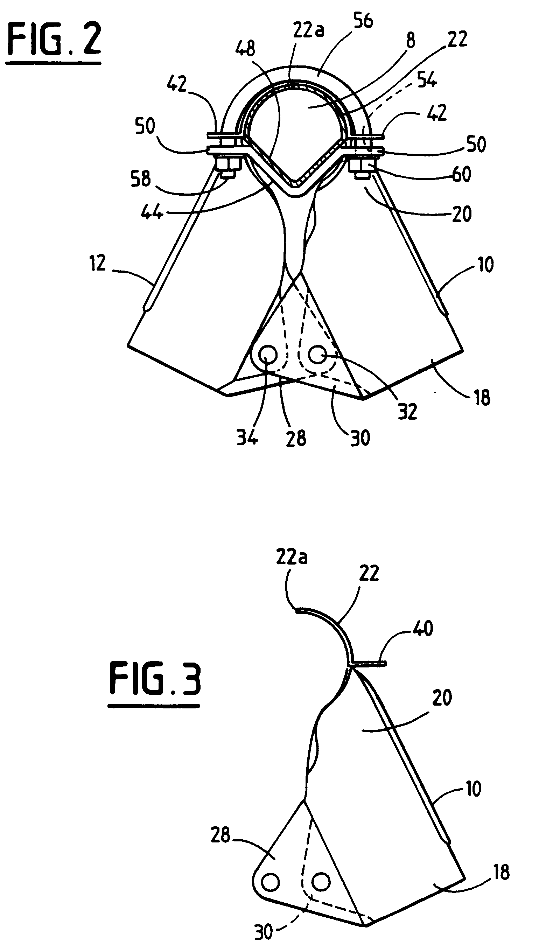

Comme le montre la figure 2, le dispositif de solidarisation selon l'invention est essentiellement constitué par deux pièces tubulaires 10 et 12 et, comme le montre mieux la figure 1, par deux ensembles formant colliers de serrage respectivement référencés 14 et 16.

Chaque pièce tubulaire, par exemple la pièce 10, comporte une extrémité ouverte 18 dans laquelle on engage les tiges inclinées formant les montants verticaux du portique et une deuxième extrémité 20 qui se prolonge par une extension 22 formant une demi-coquille de fixation sur la barre horizontale 8. L'extension 22 a la forme d'une portion de surface cylindrique correspondant à un angle au centre supérieur à 90 degrés. Comme le montre mieux la figure 1, l'extension 22 a une largeur selon la direction de la barre sensiblement supérieure au diamètre de la partie proprement tubulaire de la pièce 10. Cette extension formant demi-coquille présente ainsi deux extrémités de fixation respectivement référencées 24 et 26. Lorsque les deux pièces tubulaires 10 et 12 sont montées sur la barre horizontale 8 de telle manière que leurs extensions respectives 22 soient en appui de part et d'autre de la barre, la solidarisation de ces deux éléments sur la barre horizontale est réalisée par les colliers de serrage 14 et 16, comme on l'expliquera ultérieurement. Comme on le voit mieux sur les figures 2 et 3, chaque pièce tubulaire 10 ou 12 comporte à proximité de son extrémité 18 des pattes de fixation 28 et 30 qui font saillie hors de la pièce tubulaire. Comme le montre mieux la figure 2, lorsque les pièces tubulaires 10 et 12 sont montées sur la barre horizontale 8, les pattes de fixation 28 et 30 respectivement de chacune des pièces tubulaires se trouvent en regard et comportent des orifices de fixation 32 et 34 disposés respectivement en regard les uns des autres. Des vis sont engagées dans ces orifices pour assurer une partie de la solidarisation des pièces 10 et 12. Afin de faciliter le montage des vis de solidarisation, les pattes 28 et 30 ont, de préférence, des longueurs différentes.

Comme le montrent mieux les figures 2 et 3, les extensions 22 de chaque pièce de fixation comportent également une bride de solidarisation, respectivement référencée 40 et 42. Ces brides de fixation sont disposées aux extrémités 24 et 26 de l'extension 22 de chaque pièce tubulaire. La figure 1 montre que les éléments formant colliers de serrage 14 et 16 traversent les brides 40 et 42 assurant ainsi leur immobilisation en translation selon la direction de la barre.

Chaque collier de serrage 14 et 16 est de préférence réalisé à l'aide de deux éléments ayant chacun une forme générale de demi-cercle. Par exemple, le collier 14 comporte une pièce inférieure 44 constituée par un élément de tôle. La pièce 44 forme un V ouvert 46 qui coopère après son montage avec une une de forme conjuguée 48 prévue dans la barre 8. La barre 8 comporte bien sûr deux unes semblables 48 en regard de chacune des extrémités 24 et 26 des extensions 22 des pièces tubulaires. La pièce inférieure 44 se termine par deux portions planes formant pattes de fixation 48 et 50 qui sont en regard des brides de fixation 42 et 40 des pièces tubulaires. Chaque patte 48 et 50 est percée d'un trou 54. Chaque collier de serrage est également constitué par une tige 56 en forme de demi-cercle dont les extrémités 58 sont filetées. Lors de l'assemblage des deux pièces tubulaires 10 et 12 sur la barre horizontale 8, les extrémités 58 de l'arc de cercle 56 sont engagées dans les orifices des brides 40 et 42 et dans les orifices 54 des pattes de fixation 48 et 50 de la pièce 46. La solidarisation de l'ensemble et le serrage du collier sur la barre horizontale sont assurés par exemple par des écrous 60 vissés sur les extrémités filetées de la pièce 46.

Comme le montre mieux la figure 2, lorsque les pièces tubulaires 10 et 12 ont été assemblées et solidarisées sur la poutre horizontale 8 comme cela a été indiqué précédemment, on voit que les bords libres 22a des extensions 22 formant demi-coquilles sont en contact l'une avec l'autre.

Il découle de la description précédente que, grâce au dispositif de solidarisation selon l'invention, la poutre horizontale 8 est totalement dépourvue de pièces directement soudées sur elles et les seules discontinuités consistent dans les deux zones formant méplats 48. On comprend également que, grâce aux colliers de serrage 14 et 16 et aux demi-coquilles 22, les pièces tubulaires sont efficacement fixées sur la poutre horizontale. En outre, la solidarisation des pattes de fixation 28 et 30 des pièces tubulaires assurent l'immobilisation de ces mêmes pièces en rotation mutuelle par rapport à la poutre horizontale.

## Revendications

1. Ensemble constitué par une barre horizontale (8) solidaire de deux tiges inclinées disposées dans un plan vertical, qui comprend un dispositif de solidarisation comportant deux pièces tubulaires (10, 12) présentant chacune une première extrémité (18) apte à recevoir une première extrémité d'une des tiges et une deuxième extrémité (20) munie de moyens de fixation sur la barre, caractérisé en ce que chaque moyen de fixation comprend une extension (22) ayant une forme apte à coopérer avec une portion du contour de la barre horizontale et une paire de brides de fixation (40, 42) disposées aux extrémités de ladite extension selon la direction de la longueur de la barre, ledit dispositif de solidarisation comprenant en outre deux ensembles de moyens formant colliers de serrage (14, 16), chaque collier de serrage enserrant une des extrémités (24, 26) des extensions des pièces tubulaires et étant engagé dans les brides correspondantes et en ce que les deux pièces tubulaires (10, 12) comportent des moyens (28, 30) pour solidariser, de façon démontable, l'une par rapport à l'autre les premières extrémités des pièces tubulaires.

2. Ensemble selon la revendication 1, dans lequel la barre (8) a une section droite circulaire, caractérisé en ce que chaque extension (22) des pièces tubulaires porte une portion ayant la forme d'au moins un quart de surface cylindrique pour venir en appui sur la partie correspondante de ladite barre et ladite barre comporte en regard de chaque ensemble formant collier de serrage (14, 16) au moins une partie aplatie (48) apte à coopérer avec une partie conjuguée du collier de serrage.

3. Ensemble selon la revendication 2, caractérisé en ce que chaque moyen formant collier de serrage est constitué de deux éléments (44, 56), les éléments d'un moyen formant collier de serrage étant reliés entre eux par leurs extrémités à l'aide d'organe de vissage (58, 60).

4. Ensemble selon la revendication 3, caractérisé en ce que le premier élément (56) du collier est constitué par une pièce en forme de demi-cercle dont les extrémités (58) sont filetées et disposées au-dessus des extrémités (24, 26) des extensions (22) des pièces tubulaires, en ce que l'autre élément du collier de serrage (44) est constitué par une pièce apte à entourer sensiblement la moitié de la périphérie de la barre non recouverte par lesdites extensions et à coopérer avec ladite partie plane (48) de la barre, ladite pièce comportant un trou (54) à chacune de ses extrémités (48) pour recevoir les extrémités (58) du premier élément (56) du collier de serrage.

5. Ensemble selon la revendication 4, caractérisé en ce que chaque extrémité (48) du deuxième élément (44) du collier de serrage est plane et comporte ledit trou, chaque extrémité plane venant en regard de la bride correspondante (40, 42) des extensions des pièces tubulaires.

6. Ensemble selon l'une quelconque des revendications 1 à 5, caractérisé en ce que les moyens de solidarisation des premières extrémités (18) des pièces tubulaires (10, 12) comprennent des pattes de fixation (28, 30) faisant saillie hors des pièces tubulaires et solidarisées entre elles par des moyens démontables.

7. Ensemble selon l'une quelconque des revendications 1 à 6, caractérisé en ce que les pattes de fixation (28, 30) sont définies de telle manière que, lorsque les deux pièces tubulaires sont solidarisées entre elles et sur la barre horizontale, les bords libres (22a) des extensions (22) des deux pièces tubulaires soient en contact mutuel.

## Claims

1. Assembly formed by a horizontal bar (8) integral with two inclined rods arranged in a vertical plane, comprising a rigidly securing device comprising two tubular pieces (10, 12), each having a first end (18) suitable for receiving a first end of one of the rods and a second end (20) provided with a means for fixing to the bar, characterised in that each fixing means comprises an extension (22) having a shape suitable for co-operating with a portion of the contour of the horizontal bar, and a pair of fixing flanges (40, 42) arranged at the ends of said extension following the direction of the length of the bar, said rigidly securing device further comprising two sets of means forming clamping collars (14, 16), each clamping collar embracing one of the ends (24, 26) of the extensions of the tubular pieces and being engaged in the corresponding flanges, and in that the two tubular pieces (10, 12) have means (28, 30) for rigidly securing the first ends of the tubular pieces, one with respect to the other, in a demountable manner.

2. Assembly according to Claim 1, wherein the bar (8) has a circular straight section, characterised in that each extension (22) of the tubular pieces carries a portion having the shape of at least a quarter of the cylindrical surface in order to rest on the corresponding part of said bar, and said bar has, facing each assembly forming a clamping collar (14, 16), at least one flat part (48) suitable for cooperating with a connected part of the clamping collar.

3. Assembly according to Claim 2, characterised in that each means forming a clamping collar consists of two elements (44, 56), the elements of a means forming a clamping collar being interconnected via their ends by means of a screwing member (58, 60).

4. Assembly according to Claim 3, characterised in that the first element (56) of the collar consists of a piece semicircular in shape, the ends (58) of which are threaded and arranged above the ends (24, 26) of the extensions (22) of the tubular pieces, in that the other element of the clamping collar (44) consists of a piece suitable for embracing substantially half the periphery of the bar not covered by said extensions and for co-operating with said flat part (48) of the bar, said piece having a hole (54) at each of its ends (48) to receive the ends (58) of the first element (56) of the clamping collar.

5. Assembly according to Claim 4, characterised in that each end (48) of the second element (44) of the clamping collar is flat and has said hole, each flat end facing the corresponding flange (40, 42) of the extensions of the tubular pieces.

6. Assembly according to any one of Claims 1 to 5, characterised in that the rigidly securing means of the first ends (18) of the tubular pieces (10, 12) consist of fixing feet (28, 30) protruding from the tubular pieces and rigidly secured to each other by demountable means.

7. Assembly according to any one of Claims 1 to 6, characterised in that the fixing feet (28, 30) are defined in such a way that, when the two tubular pieces are rigidly secured to each other and to the horizontal bar, the free edges (22a) of the extensions (22) of the two tubular pieces are in mutual contact.

## Patentansprüche

1. Anordnung gebildet aus einem horizontalen Barren (8), der mit zwei geneigten, in einer vertikalen Ebene angeordneten Stangen verbunden ist, die eine Verbindungsvorrichtung mit zwei rohrförmigen Stücken (10, 12) aufweist, die jeweils ein erstes Ende (18), das ein erstes Ende einer der Stangen aufnehmen kann, und ein zweites Ende (20) aufweist, das mit Mitteln zur Befestigung auf dem Barren ausgestattet ist, dadurch gekennzeichnet, daß jedes Befestigungsmittel eine Verlängerung (22) mit einer Form, die mit einem Abschnitt des Umrisses des horizontalen Barrens zusammenwirken kann, und ein Paar von Befestigungsflanschen (40, 42) aufweist, die an den Enden der Verlängerung in Richtung der Länge des Barrens angeordnet sind, wobei die Verbindungsvorrichtung außerdem zwei Anordnungen von Klemmbändern (14, 16) bildenden Mitteln aufweist, wobei jedes Klemmband eines der Enden (24, 26) der Verlängerungen der rohrförmigen Stücke umschließt und in die entsprechenden Flansche eingelassen ist, und daß die beiden rohrförmigen Stücke (10, 12) Mittel (28, 30) zur demontierbaren gegenseitigen Verbindung der ersten Enden der rohrförmigen Stücke aufweisen.

2. Anordnung nach Anspruch 1 bei der der Barren (8) einen kreisförmigen Querschnitt aufweist, dadurch gekennzeichnet, daß jede Verlängerung (22) der rohrförmigen Stücke einen Abschnitt trägt, der die Form wenigstens eines Viertels der zylindrischen Oberfläche hat, um auf den entsprechenden Teil des Barrens zu drücken, und der Barren gegenüber jeder ein Klemmband (14, 16) bildenden Anordnung wenigstens ein abgeflachtes Teil (48) aufweist, das mit einem mit dem Klemmband verbundenen Teil zusammenwirken kann.

3. Anordnung nach Anspruch 2, dadurch gekennzeichnet, daß jedes ein Klemmband bildendes Mittel aus zwei Elementen (44, 56) gebildet ist, wobei die Elemente eines ein Klemmband bildenden Mittels untereinander durch ihre Enden mittels eines Schraubelements (58, 60) verbunden sind.

4. Anordnung nach Anspruch 3, dadurch gekennzeichnet, daß das erste Element (56) des Bandes aus einem halbkreisförmigen Stück gebildet ist, dessen Enden (58) mit Gewinde versehen und oberhalb der Enden (24, 26) der Verlängerungen (22) der rohrförmigen Stücke angeordnet sind, und daß das andere Element des Klemmbandes (44) aus einem Stück gebildet ist, das im wesentlichen die Hälfte des nicht von den Verlängerungen bedeckten Barrenumfangs umgeben kann und mit dem flachen Teil (48) des Barrens zusammenwirken kann, wobei das Stück ein Loch (54) an jedem seiner Enden (48) aufweist, um die Enden (58) des ersten Elements (56) des Klemmbandes aufzunehmen.

5. Anordnung nach Anspruch 4, dadurch gekennzeichnet, daß jedes Ende (48) des zweiten Elements (44) des Klemmbandes flach ist und das Loch aufweist, wobei jedes flache Ende gegenüber dem entsprechenden Flansch (40, 42) der Verlängerungen der rohrförmigen Stücke zu liegen kommt.

6. Anordnung nach einem der Ansprüche 1 bis 5, dadurch gekennzeichnet, daß die Mittel zur Verbindung der ersten Enden (18) der rohrförmigen Stücke (10, 12) Befestigungsklammern (28, 30) aufweisen, die außerhalb der rohrförmigen Stücke vorragen und untereinander durch demontierbare Mittel verbunden sind.

7. Anordnung nach einem der Ansprüche 1 bis 6, dadurch gekennzeichnet, daß die Befestigungklammern (28, 30) so definiert sind, daß wenn die beiden rohrförmigen Stücke untereinander und mit dem horizontalen Barren verbunden sind, die freien Ränder (22a) der Verlängerungen (22) der beiden rohrförmigen Stücke in gegenseitigem Kontakt sind.
